# EUROPEAN PATENT APPLICATION

(11) **EP 3 965 516 A1**
(43) Date of publication of application: **09.03.2022**
(21) Application number: 19926878.0
(22) Date of filing: 02.05.2019
(51) Int. Cl.: H04W 74/08, H04W 28/06

(54) **USER EQUIPMENT AND BASE STATION DEVICE**

(71) Applicant: NTT DOCOMO, INC., Chiyoda-Ku Tokyo 100-6150 (JP)
(72) Inventor: OHARA, Tomoya, Tokyo 100-6150 (JP); UCHINO, Tooru, Tokyo 100-6150 (JP); TAKAHASHI, Hideaki, Tokyo 100-6150 (JP); WANG, Lihui, Beijing, 100190 (CN); HOU, Xiaolin, Beijing, 100190 (CN)
(74) Representative: Hoffmann Eitle
(86) International application number: PCT/JP2019/018193
(87) International publication number: WO 2020/222282

(57) **Abstract**

A user equipment includes a transmission unit that transmits a first message to a base station apparatus, the first message including a random access preamble in a two-step random access procedure, a reception unit that receives a second message for contention resolution in the two-step random access procedure from the base station apparatus, and a control unit that determines a transport block size of an uplink shared channel included in the first message based on a parameter associated with communication to the base station apparatus.

## Description

### TECHNICAL FIELD

The present invention relates to a user equipment and a base station apparatus in a radio communication system.

### BACKGROUND ART

In NR (New Radio) (also referred to as "5G") as a successor system of LTE (Long Term Evolution), techniques for providing greater network capacity, higher data transmission speeds, reduced latency, simultaneous connections of more terminals, lower cost, and improved power efficiency are being discussed (for example, non-patent document 1).

With NR, similar to the LTE, random access is performed for establishing synchronization or scheduling requests between user equipment and a base station apparatus. There are two types of random access procedures: CBRA (Contention Based Random Access) procedure and CFRA (Contention Free Random Access) procedure (for example, non-patent document 2).

### [Prior Art Document]

### [Non-Patent Document]

[Non-Patent Document 1] 3GPP TS 38.300 V15.5.0 (2019-03)
[Non-Patent Document 2] 3GPP TS 38.321V15.5.0 (2019-03)

### SUMMARY OF INVENTION

### [PROBLEM TO BE SOLVED BY THE INVENTION]

In the contention based random access procedure for an NR radio communication system, a two-step random access procedure is being discussed in addition to the conventional four-step random access procedure. In the two-step random access procedure, the user equipment and the base station apparatus need to determine a TBS (Transport Block Size) for a PUSCH (Physical Uplink Shared Channel) for transmitting a data portion excluding a random access preamble of a MsgA.

In light of the above aspect, the present invention aims to determine the size of a message for use in the random access procedure.

### [MEANS FOR SOLVING THE PROBLEM]

According to a technique disclosed herein, there is provided a user equipment, comprising:
a transmission unit that transmits a first message to a base station apparatus, the first message including a random access preamble in a two-step random access procedure;
a reception unit that receives a second message for contention resolution in the two-step random access procedure from the base station apparatus; and
a control unit that determines a transport block size of an uplink shared channel included in the first message based on a parameter associated with communication to the base station apparatus.

### [ADVANTAGE OF THE INVENTION]

According to the disclosed technique, the size of a message for use in the random access procedure can be determined.

### BRIEF DESCRIPTION OF DRAWINGS

FIG. 1 is a diagram illustrating a radio communication system according to an embodiment of the present invention;
FIG. 2 is a sequence diagram illustrating an example (1) of a random access procedure;
FIG. 3 is a sequence diagram illustrating an example (2) of a random access procedure;
FIG. 4 is a sequence diagram illustrating an example of a four-step random access procedure;
FIG. 5 is a sequence diagram illustrating an example of a two-step random access procedure;
FIG. 6 is a diagram illustrating an example of Msg2 for the four-step random access procedure;
FIG. 7 is a diagram illustrating an example of Msg4 for the four-step random access procedure;
FIG. 8 is a flowchart illustrating an example of a random access procedure according to an embodiment of the present invention;
FIG. 9 is a sequence diagram illustrating an example of a random access procedure according to an embodiment of the present invention;
FIG. 10 is a diagram illustrating one example of a functional arrangement of a base station apparatus 10 according to an embodiment of the present invention;
FIG. 11 is a diagram illustrating one example of a functional arrangement of a user equipment 20 according to an embodiment of the present invention; and
FIG. 12 is a diagram illustrating one example of a hardware arrangement of the base station apparatus 10 or the user equipment 20 according to an embodiment of the present invention.

### EMBODIMENTS OF THE INVENTION

Hereinafter, embodiments of the present invention will be described with reference to the drawings. The embodiments described below are merely examples, and embodiments to which the present invention is applied are not limited to the following embodiments.

In operations of a radio communication system of an embodiment of the present invention, existing techniques are used as needed. Note that the existing techniques are existing LTE, for example, but are not limited to the existing LTE. Also, unless specifically stated otherwise, it should be appreciated that the terminology "LTE" used herein has a broader meaning including LTE-Advanced and its subsequent schemes (e.g., NR) .

Also, in embodiments of the present invention as described below, terminologies "SS (Synchronization Signal)", "PSS (Primary SS)", "SSS (Secondary SS)", "PBCH (Physical Broadcast Channel)". "PRACH (Physical Random Access Channel)" or the like used in the existing LTE are used. This is due to convenience of recitations, and a signal, a function or the like similar to them may be referred to as other wordings. Also, the above terminologies correspond to "NR-SS", "NR-PSS", "NR-SSS", "NR-PBCH" and "NR-PRACH", respectively, in the NR. Note that even if the signals are used in the NR, they may not be explicitly described as "NR-".

Also, in embodiments of the present invention, the duplexing scheme may be TDD (Time Division Duplexing), FDD (Frequency Division Duplexing) or another scheme (e.g., flexible duplexing or the like).

Also, in embodiments of the present invention, "configuring" a radio parameter or the like may mean that a predetermined value is pre-configured or that a radio parameter indicated from the base station apparatus 10 or the user equipment 20 is configured.

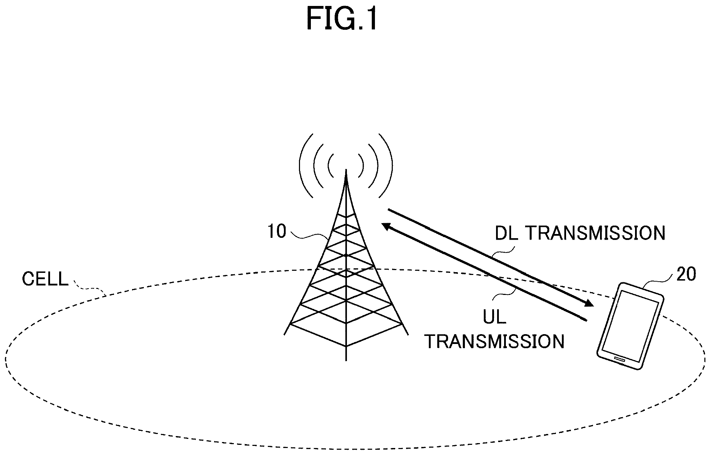

FIG. 1 is a diagram illustrating a radio communication system according to an embodiment of the present invention. As illustrated in FIG. 1, the radio communication system according to the embodiment of the present invention includes the base station apparatus 10 and the user equipment 20. In FIG. 1, the single base station apparatus 10 and the single user equipment 20 are illustrated, but the illustrated embodiment is merely one example, and a plurality of the base station apparatus 10 and a plurality of the user equipments 20 may be provided.

The base station apparatus 10 is a communication device that serves one or more cells and wirelessly communicates to the user equipment 20. A physical resource for a radio signal is defined with a time domain and a frequency domain. The time domain may be defined with the number of OFDM symbols, and the frequency domain may be defined with the number of subcarriers or the number of resource blocks. The base station apparatus 10 transmits a synchronization signal and system information to the user equipment 20. The synchronization signal may be an NR-PSS and an NR-SSS, for example. The system information may be transmitted in an NR-PBCH, for example, and may be also referred to as broadcast information. As illustrated in FIG. 1, the base station apparatus 10 transmits a control signal or data to the user equipment 20 in downlinks (DLs) and receives a control signal or data from the user equipment 20 in uplinks (ULs). Either of the base station apparatus 10 and the user equipment 20 can perform beamforming to transmit and receive signals. Also, either of the base station apparatus 10 and the user equipment 20 can apply MIMO (Multiple Input Multiple Output) communication to the DLs and ULs. Also, any of the base station apparatus 10 and the user equipment 20 may communicate via a SCell (Secondary Cell) and a PCell (Primary Cell) in CA (Carrier Aggregation).

The user equipment 20 is a communication device having a radio communication function such as a smartphone, a portable telephone, a tablet, a wearable terminal, a M2M (Machine-to-Machine) communication module or the like. As illustrated in FIG. 1, the user equipment 20 receives a control signal or data from the base station apparatus 10 in DLs and transmits a control signal or data to the base station apparatus 10 in ULs to use various communication services provided by the radio communication system.

In the random access procedure performed for establishing synchronization or scheduling requests between the user equipment 20 and the base station apparatus 10, for example, the user equipment 20 transmits a random access preamble or a UE (User Equipment) identifier as a UL signal to the base station apparatus 10, and the base station apparatus 10 transmits a random access response and information for contention resolution as a DL signal to the user equipment 20.

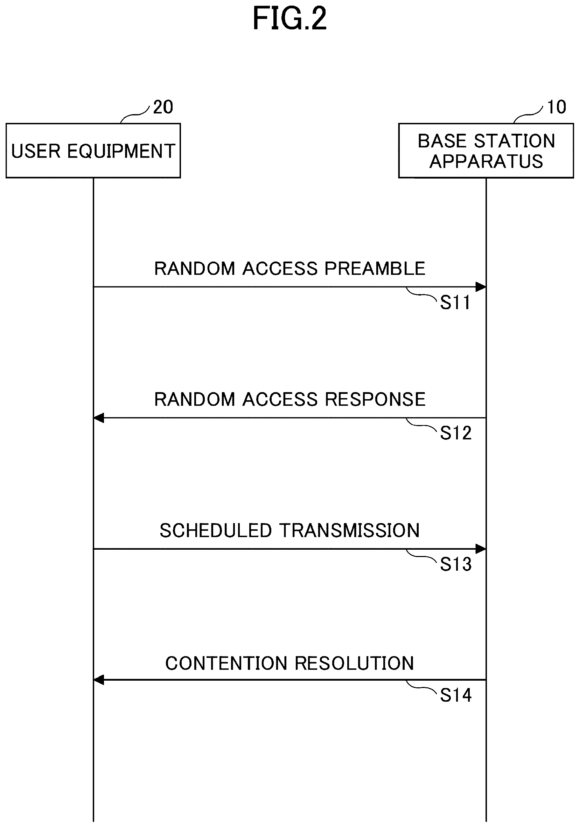

FIG. 2 is a sequence diagram illustrating an example (1) of a random access procedure. The example of a random access procedure shown in FIG. 2 is the contention based random access procedure. Upon starting the contention based random access procedure, at step S11, the user equipment 20 transmits a random access preamble to the base station apparatus 10. Then, the base station apparatus 10 transmits a random access response to the user equipment 20 (S12). Then, the user equipment 20 performs transmission to the base station apparatus 10, the transmission being scheduled by the random access response (S13). In the scheduled transmission, information that identifies the user equipment 20 is transmitted. Then, the base station apparatus 10 transmits information for contention resolution to the user equipment 20 (S14). When the contention resolution is successful, the random access procedure is successfully finished.

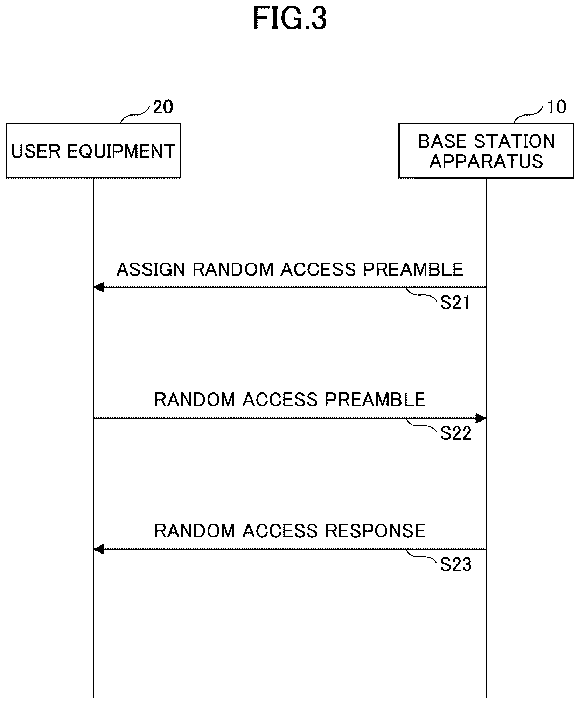

FIG. 3 is a sequence diagram illustrating an example (2) of a random access procedure. The example of a random access procedure shown in FIG. 3 is the contention free random access procedure. Upon starting the contention free random access procedure, at step S21, the base station apparatus 10 assigns a random access preamble to the user equipment 20. Then, the user equipment 20 transmits the assigned random access preamble to the base station apparatus 10 (S22) . Then, the base station apparatus 10 transmits a random access response to the user equipment 20.

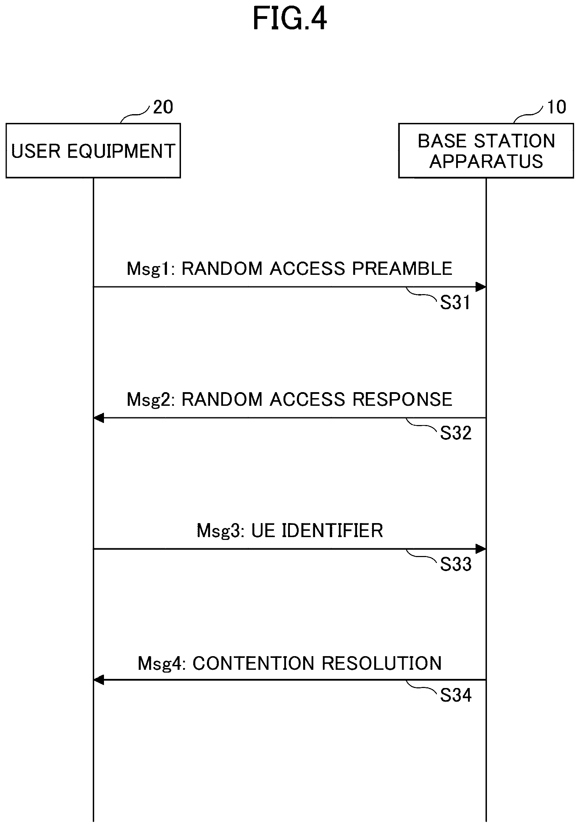

FIG. 4 is a sequence diagram illustrating an example of a four-step random access procedure. The example of a random access procedure shown in FIG. 4 is the contention based random access procedure similar to FIG. 2 and is the four-step random access procedure. At step S31, the user equipment 20 transmits a random access preamble as Msg1 to the base station apparatus 10. Then, the base station apparatus 10 transmits, as Msg2, a random access response to the user equipment 20 (S32). Then, the user equipment 20 transmits a UE identifier as Msg3 to the base station apparatus 10 (S33). Then, the base station apparatus 10 transmits information for contention resolution as Msg4 to the user equipment 20. If the contention resolution is successful, the random access procedure is successfully finished.

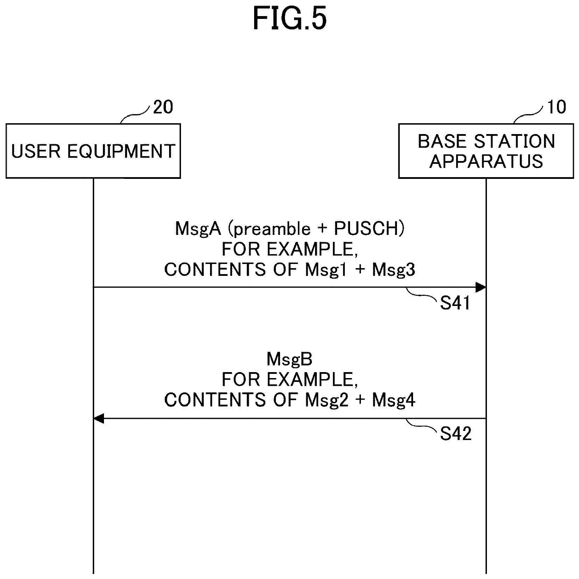

FIG. 5 is a sequence diagram illustrating an example of a two-step random access procedure. The random access procedure shown in FIG. 5 is the contention based random access procedure and is the two-step random access procedure. The two-step random access procedure is discussed as a procedure to complete the random access procedure in a shorter time. At step S41, the user equipment 20 transmits a random access preamble and a PUSCH (Physical Uplink Shared Channel) as MsgA to the base station apparatus 10. For example, contents corresponding to the Msg1 and Msg3 in the four-step random access procedure may be transmitted via the PUSCH. Then, the base station apparatus 10 transmits MsgB to the user equipment 20 (S42). For example, the MsgB may include contents corresponding to the Msg2 and Msg4 in the four-step random access procedure. If the contention resolution is successful, the random access procedure is successfully finished. By using the two-step random access procedure, some effects such as reduced latency and reduced power consumption are expected.

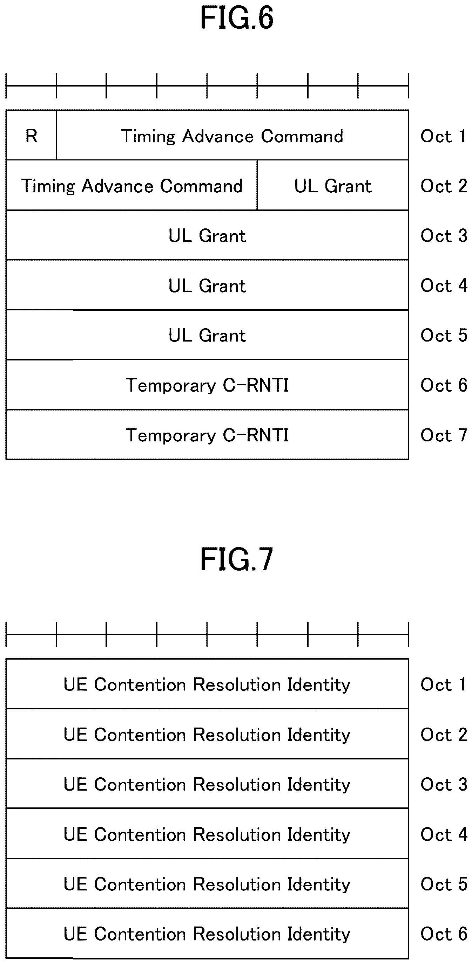

FIG. 6 is a diagram illustrating an example of Msg2 for the four-step random access procedure. As illustrated in FIG. 6, a "Timing Advance Command", an "UL Grant" and a "Temporary C-RNTI" are included in a MAC (Medium Access Control) payload in the Msg2, that is, in the random access response. Note that "R" denotes a reserved bit.

The "Timing Advance Command" is a parameter for determining the timing of UL transmission. In the base station apparatus 10, reception timings for ULs transmitted from the respective user equipments 20 are adjusted to fall within a predetermined range. The "UL Grant" is a parameter for UL scheduling. The user equipment 20 transmits Msg3 in ULs based on the "UL Grant". The "Temporary C-RNTI" is a temporary C-RNTI (Cell-Radio Network Temporary Identifier). If the contention resolution is successful in the Msg4, the "Temporary C-RNTI" is used as a C-RNTI.

FIG. 7 is a diagram illustrating an example of Msg4 for the four-step random access procedure. As illustrated in FIG. 7, a "UE Contention Resolution Identity" is included in the Msg4, that is, in the "contention resolution". If the received "UE Contention Resolution Identity" corresponds to information transmitted in the Msg3, the user equipment 20 determines that the contention resolution is successful. Namely, if the Msg3 including a CCCH SDU is transmitted, upon a PDCCH (Physical Downlink Control Channel) for transmitting the Msg4 being addressed to the Temporary C-RNTI and a portion of the transmitted CCCH SDU being included, it is determined that the contention resolution is successful. Subsequently, the above random access procedure for the contention resolution is referred to as a "random access procedure using the CCCH SDU".

If the Msg3 including the C-RNTI is transmitted, upon the PDCCH for transmitting the Msg4 being addressed to the C-RNTI or the PDCCH for transmitting the Msg4 being addressed to the C-RNTI and including the UL Grant, it is determined that the contention resolution is successful. Subsequently, the above random access procedure for the contention resolution is referred to as a "random access procedure using no CCCH SDU".

Here, it is assumed that data transmitted via a PUSCH excluding a preamble in the MsgA in the two-step random access procedure at least includes information corresponding to the Msg3 (for example, information associated with an RRC (Radio Resource Control) connection request). Furthermore, it is assumed that data transmitted via the PUSCH excluding the preamble in the MsgA includes information associated with user data or the like, for example.

An information amount included in the PUSCH excluding the preamble in the MsgA, that is, a transport block size, must be determined depending on communication environments, a required data amount or the like. In addition, the base station apparatus 10 needs to know the TBS of the PUSCH included in the MsgA transmitted from the user equipment 20.

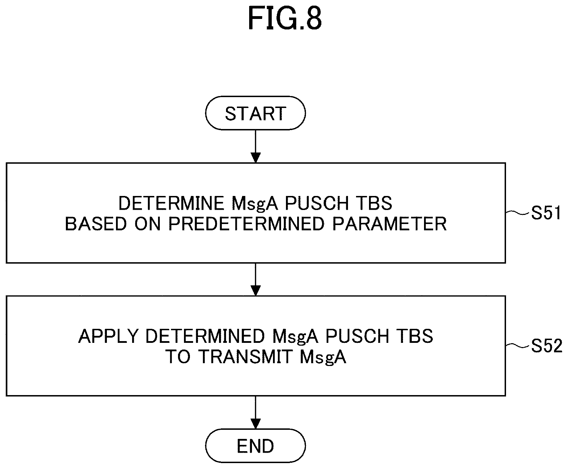

FIG. 8 is a flowchart illustrating an example of a random access procedure according to an embodiment of the present invention. At step S51, the user equipment 20 determines the TBS of the PUSCH included in the MsgA based on a predetermined parameter. Then, the user equipment 20 applies the determined TBS and transmits the MsgA (S52). At step S51, the TBS of the PUSCH included in the MsgA may be determined based on predetermined parameters as shown in 1) to 5) below. For example, the user equipment 20 may determine the TBS directly based on the predetermined parameters or select a candidate, for which the predetermined parameters satisfy a threshold or a condition, from preconfigured multiple TBS candidates (for example, five types of candidates).

### 1) DL radio quality

For example, for downlinks, an RSRP (Reference Signal Received Power), an RSRQ (Reference Signal Received Quality), a SINR (Signal to Interference plus Noise power Ratio), a pathloss and so on may be available.

### 2) UL transmit power

For example, an actual transmit power value, information indicating whether a maximum transmit power is reached, information indicating whether a transmit power corresponding to a target receive power is below a predetermined value or the like may be available. The predetermined value may be specified in the specification or indicated from a network. The UL transmit power may be a transmit power for a PUSCH or a preamble.

### 3) Information associated with modulation, information associated with encoding or a parameter regarding MIMO (Multiple-Input and Multiple-Output)

For example, a MCS (Modulation and Coding Scheme), a rank or the like may be available.

### 4) Data size transmitted from a UE

The data size may be freely determined by a UE, or only a predetermined data type may be considered. For example, a C-RNTI, a BSR (Buffer Status Report) MAC-CE (Media Access Control-Control Element), a CCCH (Common Control Channel) SDU (Service Data Unit), a PHR (Power Headroom Report), data of a certain LCH (Logical Channel) and so on may be considered. For example, the certain LCH may be a LCH having a high priority (an SRB (Signaling Radio Bearer), certain QoS data, an LCH associated with a bearer configured for duplicated packet transmissions, or the like), an LCH indicated from a network, or the like.

### 5) Parameter regarding a QoS (Quality of Service) of an LCH

For example, a required delay, a packet loss rate, a reliability or the like may be available.

The parameters of the above 1) to 5) may be used in combination. A scheme for determining the TBS from the above parameters may be defined in the specification, indicated from a network or performed in UE implementations. For example, correspondence between the respective parameters and the TBS may be indicated or specified. Also, in cases where a candidate, for which a predetermined parameter satisfies a threshold or a condition, is selected from preconfigured or predefined multiple TBS candidates and such multiple candidates, for which the threshold or the condition is satisfied, are present, one candidate may be selected from the multiple candidates by UE implementation. Alternatively, a scheme for determining one candidate from the multiple candidates may be specified in the specification or indicated from a network.

Note that when the MsgA is retransmitted or fallback to the four-step random access procedure (for example, a PUSCH included in the MsgA is transmitted in the Msg3) is performed for determination or selection of a TBS of the PUSCH included in the MsgA, the user equipment 20 may improve the probability of successful transmission and reception by setting the TBS to a value smaller than that of the PUSCH transmitted immediately before the transmission and reception. For example, in the case of selection from TBS candidates specified by multiple levels, the user equipment 20 may select a candidate that is one-level lower than the candidate transmitted immediately before the selection or a candidate that is two-levels-or-more lower than the candidate transmitted immediately before the selection.

Note that for determination or selection of the TBS of the PUSCH included in the MsgA, the user equipment 20 may determine or select the TBS indirectly through determining or selecting other parameters without determining or selecting the TBS itself directly. For example, the user equipment 20 may determine or select the TBS indirectly by determining or selecting the number of RBs (Resource Blocks) and the MCS and so on. In embodiments of the present invention, the "TBS" may be read interchangeably to "one or more parameters for determining the TBS".

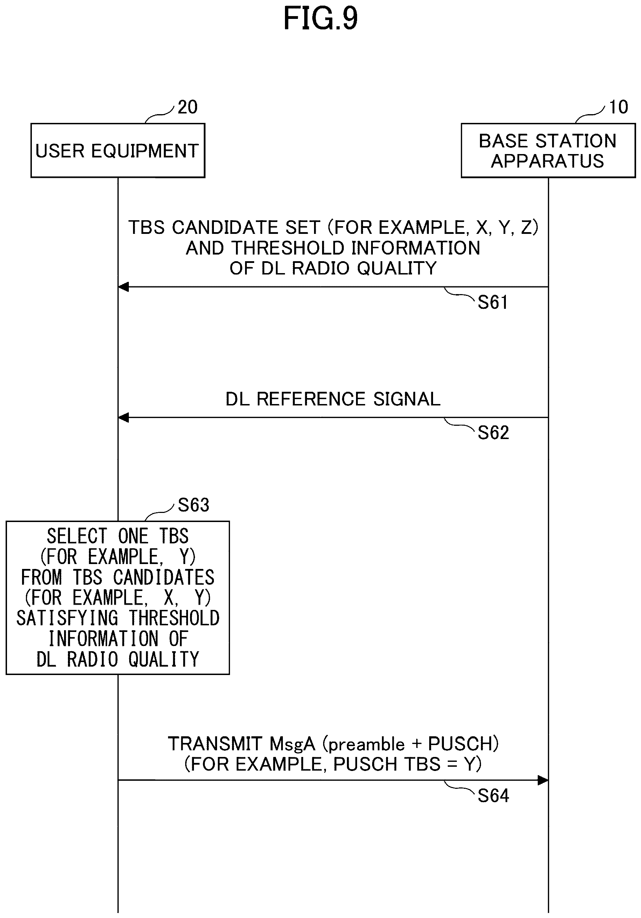

FIG. 9 is a sequence diagram illustrating an example of a random access procedure according to an embodiment of the present invention. Candidates available for the TBS of a PUSCH included in the MsgA may be specified in advance in the specification or indicated from a network to the user equipment 20 in broadcast information, an RRC signaling or the like.

At step S61, the base station apparatus 10 transmits a candidate set (for example, the bit number is X, Y or Z) of the TBS of the PUSCH included in the MsgA and threshold information items for DL radio quality (for example, the RSRP is higher than or equal to X: -90 dBm, Y: -80 dBm or Z: -70 dBm) associated with the respective candidates of the set to the user equipment 20. In the case where candidates available for the TBS of the PUSCH included in the MsgA are predefined in the specification, step S61 may be omitted. At step S62, the base station apparatus 10 transmits a DL reference signal to the user equipment 20.

At step S63, the user equipment 20 selects TBS candidates that satisfy the threshold information of the DL radio quality associated with respective candidates of the set received at step S61, based on the radio quality of the DL reference signal received at step S62. For example, if the RSRP of the received DL reference signal is -75 dBm, the candidates satisfying the threshold information of the DL radio quality are X and Y. The user equipment 20 may select the X or the Y (for example, the Y) based on the parameters 1) to 5) described in FIG. 8, or one candidate may be selected based on the UE implementation. Then, the user equipment 20 transmits the MsgA, where the selected TBS (for example, the Y) of the PUSCH included in the MsgA is configured, to the base station apparatus 10 (S64).

Note that the user equipment 20 may select one TBS candidate that satisfies the threshold information of the DL radio quality associated with the respective candidates in the set received at step S61, based on the radio quality of the DL reference signal received at step S62. For example, if the RSRP of the received DL reference signal is -85 dBm, the candidate X may be selected.

Here, the user equipment 20 may indicate the determined or selected TBS of the PUSCH included in the MsgA to the base station apparatus 10 in the manners shown in a) to e) as follows.

### a) Preamble ID

For example, preamble IDs may be divided into multiple groups associated with the respective TBSs. The user equipment 20 transmits a preamble to indicate the TBS associated with the preamble ID to the base station apparatus 10. A division scheme into the multiple groups associated with the respective TBSs may be indicated in advance from the base station apparatus 10 to the user equipment 20 or predefined in the specification.

### b) RACH occasion (resources for transmitting the preamble)

For example, a RACH occasion may be divided into multiple groups associated with the respective TBSs. The user equipment 20 transmits a preamble in the RACH occasion to indicate the TBS associated with the RACH occasion to the base station apparatus 10. A division scheme into the multiple groups associated with the TBSs may be indicated in advance from the base station apparatus 10 to the user equipment 20 or predefined in the specification. The RACH occasion may be classified in a time domain, a frequency domain or the time and frequency domains.

### c) PUSCH assigned resources

For example, PUSCH assigned resources may be divided into multiple groups associated with the respective TBSs. The user equipment 20 transmits a PUSCH of the MsgA to indicate the TBS associated with the PUSCH assigned resource to the base station apparatus 10. A division scheme into the multiple groups associated with the TBSs may be indicated in advance from the base station apparatus 10 to the user equipment 20 or predefined in the specification. The PUSCH assigned resources may be classified in a time domain, a frequency domain or the time and frequency domains.

### d) DMRS (Demodulation Reference Signal) of the PUSCH

For example, a DMRS port or scrambling for DMRS for the PUSCH may be divided into multiple groups associated with the respective TBSs. The user equipment 20 transmits the PUSCH of the MsgA to indicate the TBS associated with the DMRS port or the DMSR scrambling to the base station apparatus 10. A division scheme into the multiple groups associated with the TBSs may be indicated in advance from the base station apparatus 10 to the user equipment 20 or predefined in the specification.

### e) Explicit indication with UCI

For example, the user equipment 20 may explicitly indicate the TBS to the base station apparatus 10 with a UCI beforehand. Alternatively, for example, the TBS of the Msg A PUSCH other than the UCI may be indicated to the base station apparatus 10 with the UCI using a portion of the MsgA PUSCH.

The above indication schemes a) to e) of the TBS of the PUSCH included in the MsgA may be used in combination. Also, which of the indication schemes a) to e) of the TBS of the PUSCH included in the MsgA is to be used may be defined in the specification, indicated from a network or selected in UE implementation.

Note that association of the TBS of the PUSCH included in the MsgA with the preamble (a preamble ID or a RACH occasion) of the MsgA and the PUSCH (a PUSCH resource, a DMRS port of the PUSCH or DMRS scrambling of the PUSCH) of the MsgA may be defined in advance in the specification or indicated from the base station apparatus 10 to the user equipment 20. The user equipment 20 may indicate the TBS of the PUSCH included in the MsgA by selecting the PUSCH of the MsgA and further the preamble of the MsgA corresponding to the selected TBS and transmitting the resulting MsgA.

Also, if multiple PUSCHs (PUSCH resources, DMRS ports of the PUSCHs or DMRS scrambling of the PUSCHs) of the MsgA correspond to the preamble of the transmitted MsgA and the selected TBS, the multiple PUSCHs of the MsgA are available. If the multiple PUSCHs of the MsgA are available, for example, the UE may select and transmit a PUSCH of the MsgA randomly from the available PUSCHs of the MsgA. Alternatively, a selection scheme from the available PUSCHs of the MsgA may be defined in the specification or indicated from a network. Also, a time domain resource of the PUSCH of the MsgA may be selected from only the PUSCHs of recent time domain resources from a timing available for transmission. A frequency resource, a DMRS port or DMRS scrambling of the PUSCH of the MsgA may be randomly selected. Alternatively, a selection scheme may be defined in the specification or indicated. If multiple PUSCHs of the MsgA are present, the above selection scheme may be applied even in the case of no correspondence between the TBS and the PUSCH of the MsgA.

According to the above embodiments, the user equipment 20 can determine or select the TBS of the PUSCH included in the MsgA in the two-step random access procedure based on parameters indicative of communication states. Also, the user equipment 20 can indicate the determined or selected TBS of the PUSCH included in the MsgA to the base station apparatus 10 in the two-step random access procedure.

Namely, the size of messages for use in the random access procedure can be determined.

### (Device Arrangement)

Next, examples of functional arrangements of the base station apparatus 10 and the user equipment 20 that perform operations as stated above are described. The base station apparatus 10 and the user equipment 20 include functions of implementing the above-stated embodiments. Note that the base station apparatus 10 and the user equipment 20 each may have only a portion of the functions of the embodiments.

### <Base station apparatus 10>

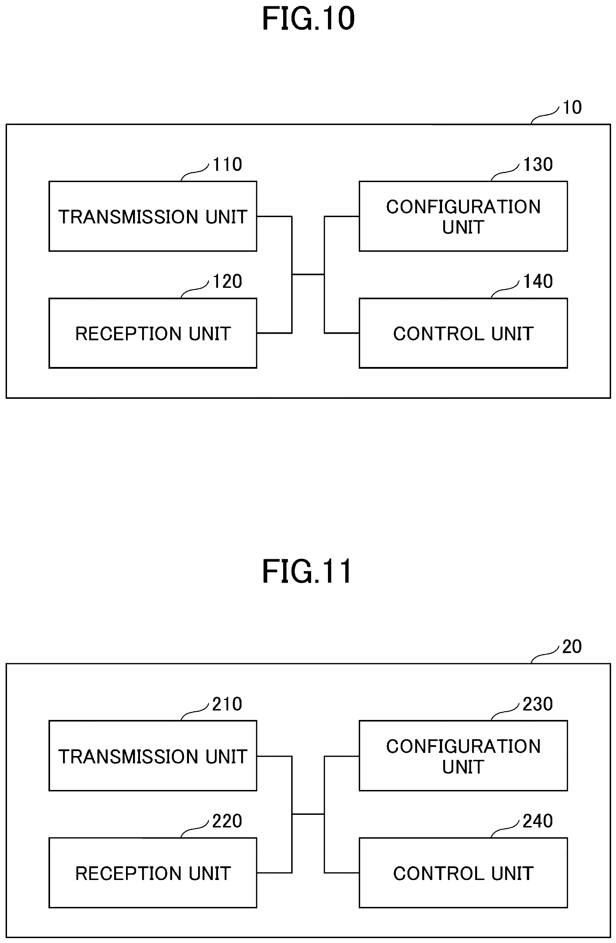

FIG. 10 illustrates an example of a functional arrangement of the base station apparatus 10. As shown in FIG. 10, the base station apparatus 10 includes a transmission unit 110, a reception unit 120, a configuration unit 130 and a control unit 140. The functional arrangement shown in FIG. 10 is only one example. The functional separation and the names of the functional units may be arbitrary as long as operations according to the present embodiment can be achieved.

The transmission unit 110 includes a function of generating a signal for transmission to the user equipment 20 and wirelessly transmitting the signal. The reception unit 120 includes a function of receiving various signals transmitted from the user equipment 20 and acquiring information for upper layers from the received signals, for example. Also, the transmission unit 110 includes a function of transmitting an NR-PSS, an NR-SSS, an NR-PBCH, a DL/UL control signal, a DL/UL data signal or the like to the user equipment 20.

The configuration unit 130 stores preconfigured configurations and various configurations for transmission to the user equipment 20 in a memory and reads out them from the memory as needed. Contents of the configurations may be configurations regarding random accesses or the like, for example.

The control unit 140 performs the two-step random access procedure or the four-step random access procedure as stated in conjunction with the embodiments. The functional portions of the control unit 140 related to signal transmission may be included in the transmission unit 110, and the functional portions of the control unit 140 related to signal reception may be included in the reception unit 120.

### <User equipment 20>

FIG. 11 is a diagram illustrating one example of a functional arrangement of the user equipment 20. As illustrated in FIG. 11, the user equipment 20 has a transmission unit 210, a reception unit 220, a configuration unit 230 and a control unit 240. The functional arrangement shown in FIG. 11 is simply an example. The functional separation and the names of the functional units may be arbitrary as long as operations according to the present embodiment can be achieved.

The transmission unit 210 generates a transmission signal from transmission data and wirelessly transmits the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal and so on transmitted from the base station apparatus 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other user equipments 20, and the reception unit 120 receives the PSCCH, the PSSCH, the PSDCH, the PSBCH or the like from other user equipment 20.

The configuration unit 230 stores various configurations received at the reception unit 220 from the base station apparatus 10 or the user equipments 20 in a memory and reads out them from the memory as needed. Also, the configuration unit 230 stores preconfigured configurations. Contents of the configurations may be configurations associated with the random access and so on, for example.

The control unit 240 performs the two-step random access procedure or the four-step random access procedure with the base station apparatus 10 as stated above. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 10 and 11) used in describing the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

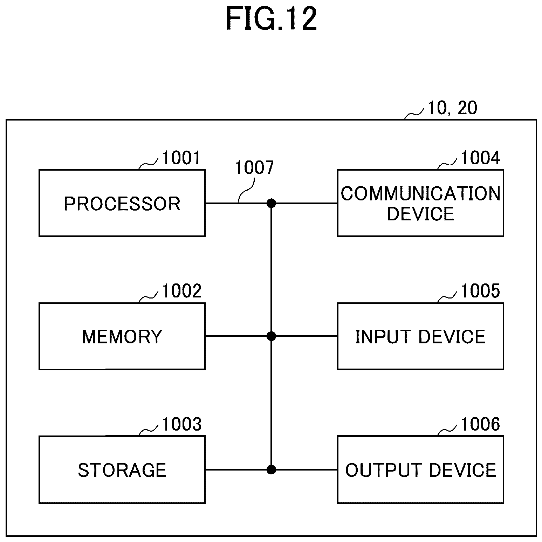

For example, each of the base station apparatus 10, the user equipment 20 and so on according to one embodiment of the present invention may function as a computer performing operations for a radio communication method according to this embodiment. FIG. 12 is a diagram illustrating an example of a hardware configuration of the base station apparatus 10 and the user equipment 20 according to one embodiment of the present disclosure. The base station 10 and the user equipment 20 as stated above may be physically configured as a computer device including a processor 1001, a memory 1002, a storage 1003, a communication device 1004, an input device 1005, an output device 1006, a bus 1007, etc.

In the following description, the term "device" can be read as a circuit, a device, a unit, etc. The hardware configuration of the base station apparatus 10 and the user equipment 20 may be configured to include one or more of the respective devices shown in the figure, or may be configured without some devices.

Each function of the base station apparatus 10 and the user equipment 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the storage 1003 and the communication device 1004 to the memory 1002, and executes various processes according to these. A program that causes a computer to execute at least a part of the operations described in the above-described embodiment may be used. For example, the control unit 140 of the base station apparatus 10 shown in FIG. 10 may be implemented by a control program that is stored in the memory 1002 and that is operated by the processor 1001. Also, for example, the control unit 240 of the user equipment 20 shown in FIG. 11 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a ROM (Read Only Memory), an EPROM (Erasable Programmable ROM), an EEPROM (Electrically Erasable Programmable ROM) , a RAM (Random Access Memory) , etc. The memory 1002 may be referred to as a register, a cache, a main memory (main storage device), etc. The memory 1002 may store a program (program code) , a software module, etc., which can be executed for implementing the radio communication method according to one embodiment of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transceiver antenna, an amplification unit, a transceiver unit, a channel interface or the like may be implemented with the communication device 1004. The transceiver unit may have an implementation with the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel) .

Each device, such as processor 1001 and memory 1002, is also connected by the bus 1007 for communicating information. The bus 1007 may be formed of a single bus or may be formed of different buses between devices.

Also, the base station apparatus 10 and the user equipment 20 may include hardware, such as a microprocessor, a digital signal processor (DSP: Digital Signal Processor), an ASIC (Application Specific Integrated Circuit) , a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a user equipment, comprising: a transmission unit that transmits a first message to a base station apparatus, the first message including a random access preamble in a two-step random access procedure; a reception unit that receives a second message for contention resolution in the two-step random access procedure from the base station apparatus; and a control unit that determines a transport block size of an uplink shared channel included in the first message based on a parameter associated with communication to the base station apparatus.

According to the above arrangement, the user equipment 20 can determine or select the TBS of a PUSCH included in a MsgA in the two-step random access procedure based on a parameter indicative of a communication state. Namely, the size of messages for use in the random access procedure can be determined.

The parameter associated with communication to the base station apparatus may include at least one of a downlink radio quality, an uplink transmit power, information regarding modulation, information regarding encoding, a parameter regarding MIMO (Multiple-Input and Multiple-Output), the data size to be transmitted, and a parameter regarding a QoS. According to the arrangement, the user equipment 20 can determine or select the TBS of a PUSCH included in a MsgA in the two-step random access procedure based on a parameter indicative of a communication state.

When retransmitting the first message or retransmitting the uplink shared channel in a four-step random access procedure, a transport block size may be used, the transport block size being smaller than a transport block size used to transmit the first message transmitted immediately before the retransmission. According to this arrangement, the user equipment 20 can improve the probability of successful retransmission of the PUSCH included in the MsgA.

The reception unit may receive multiple candidates of the transport block size of the uplink shared channel and threshold information of a downlink radio quality associated with the respective candidates, and the control unit may select the transport block size from the multiple candidates based on a measurement result of a downlink reference signal transmitted from the base station apparatus and the threshold information of the downlink radio quality. According to the arrangement, the user equipment 20 can determine the TBS based on the measurement result of the downlink reference signal.

The control unit may determine a preamble ID (Identifier) of the random access preamble, a RACH (Random Access Channel) occasion for transmitting the random access preamble, a resource to which the uplink shared channel is assigned, or a DMRS (Demodulation Reference Signal) assigned in the uplink shared channel based on the transport block size of the uplink shared channel to be used. According to the arrangement, the user equipment 20 can indicate the determined or selected TBS of the PUSCH included in the MsgA to the base station apparatus 10 in the two-step random access procedure.

Also, according to an embodiment of the present invention, there is provided a base station apparatus, comprising: a reception unit that receives a first message from a user equipment, the first message including a random access preamble in a two-step random access procedure; a transmission unit that transmits a second message for contention resolution in the two-step random access procedure to the user equipment; and a control unit that determines a transport block size of an uplink shared channel included in the first message based on a preamble ID (Identifier) of the random access preamble, a RACH (Random Access Channel) occasion for transmitting the random access preamble, a resource to which an uplink shared channel included in the first message is assigned, or a DMRS (Demodulation Reference Signal) assigned in the uplink shared channel included in the first message.

According to the above arrangement, the user equipment 20 can determine or select the TBS of a PUSCH included in a MsgA in the two-step random access procedure based on a parameter indicative of a communication state. Namely, the size of messages for use in the random access procedure can be determined.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM) , a flash memory, a read-only memory (ROM) , an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system) , 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto) . In the above, the description has been made for the case where another network node other than the base station apparatus 10 is a single node as an example. However, the other network node may be a combination of a plurality of other network nodes (for example, an MME and a S-GW) .

Information, signals, or the like described in the present disclosure may be output from an upper layer (or a lower layer) to a lower layer (or an upper layer) . Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device) , V2X (Vehicle-to-Everything) , or the like) . In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency DivisionMultiple Access) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource assignment unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements) . For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, a MsgA is one example of the first message including a random access preamble in a two-step random access procedure. A MsgB is one example of the second message for contention resolution in the two-step random access procedure.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station apparatus
- 110: Transmission unit
- 120: Reception unit
- 130: Configuration unit
- 140: Control unit
- 20: User equipment
- 210: Transmission unit
- 220: Reception unit
- 230: Configuration unit
- 240: Control unit
- 1001: Processor
- 1002: Memory
- 1003: Storage
- 1004: Communication device
- 1005: Input device
- 1006: Output device

## Claims

1. A user equipment, comprising:
a transmission unit that transmits a first message to a base station apparatus, the first message including a random access preamble in a two-step random access procedure;
a reception unit that receives a second message for contention resolution in the two-step random access procedure from the base station apparatus; and
a control unit that determines a transport block size of an uplink shared channel included in the first message based on a parameter associated with communication to the base station apparatus.

2. The user equipment as claimed in claim 1, wherein the parameter associated with communication to the base station apparatus includes at least one of a downlink radio quality, an uplink transmit power, information regarding modulation, information regarding encoding, a parameter regarding MIMO (Multiple-Input and Multiple-Output), a data size to be transmitted, and a parameter regarding a QoS.

3. The user equipment as claimed in claim 1, wherein, when retransmitting the first message or retransmitting the uplink shared channel in a four-step random access procedure, a transport block size is used, the transport block size being smaller than a transport block size used to transmit the first message transmitted immediately before the retransmission.

4. The user equipment as claimed in claim 1, wherein the reception unit receives multiple candidates of the transport block size of the uplink shared channel and threshold information items of a downlink radio quality associated with the respective candidates, and the control unit selects a transport block size from the multiple candidates based on a measurement result of a downlink reference signal transmitted from the base station apparatus and the threshold information items of the downlink radio quality.

5. The user equipment as claimed in claim 1, wherein the control unit determines a preamble ID (Identifier) of the random access preamble, a RACH (Random Access Channel) occasion for transmitting the random access preamble, a resource to which the uplink shared channel is assigned, or a DMRS (Demodulation Reference Signal) assigned in the uplink shared channel, based on the transport block size of the uplink shared channel to be used.

6. A base station apparatus, comprising:
a reception unit that receives a first message from a user equipment, the first message including a random access preamble in a two-step random access procedure;
a transmission unit that transmits a second message for contention resolution in the two-step random access procedure to the user equipment; and
a control unit that determines a transport block size of an uplink shared channel included in the first message based on a preamble ID (Identifier) of the random access preamble, a RACH (Random Access Channel) occasion for transmitting the random access preamble, a resource to which an uplink shared channel included in the first message is assigned, or a DMRS (Demodulation Reference Signal) assigned in the uplink shared channel included in the first message.
